(19) Europäisches Patentamt
European Patent Office
Office européen des brevets

(11) Veröffentlichungsnummer : **0 132 513**
**B1**

(12) # EUROPÄISCHE PATENTSCHRIFT

(45) Veröffentlichungstag der Patentschrift : **08.07.87**

(51) Int. Cl.⁴ : **C 08 G 18/80**, C 08 G 18/79, C 08 G 18/73, C 09 D 3/72

(21) Anmeldenummer : **84104672.5**

(22) Anmeldetag : **26.04.84**

(54) **Einkomponenten-Einbrennlacke.**

(30) Priorität : **24.06.83 DE 3322721**

(43) Veröffentlichungstag der Anmeldung : **13.02.85 Patentblatt 85/07**

(45) Bekanntmachung des Hinweises auf die Patenterteilung : **08.07.87 Patentblatt 87/28**

(84) Benannte Vertragsstaaten : **AT BE CH DE FR GB IT LI NL SE**

(56) Entgegenhaltungen :
**EP-A- 0 000 607**
**EP-A- 0 000 963**
**FR-A- 2 330 731**
**US-A- 3 631 198**
**Die Akte enthält technische Angaben, die nach dem Eingang der Anmeldung eingereicht wurden und die nicht in dieser Patentschrift enthalten sind.**

(73) Patentinhaber : **HÜLS AKTIENGESELLSCHAFT**
**Patentabteilung / PB 15 - Postfach 13 20**
**D-4370 Marl 1 (DE)**

(72) Erfinder : **Disteldorf, Josef, Dr.**
**Am Sengenhoff 2a**
**D-4690 Herne 1 (DE)**
Erfinder : **Gras, Rainer, Dr.**
**Im Ostholz 49a**
**D-4630 Bochum 5 (DE)**

**EP 0 132 513 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft lösungsmittelhaltige Polyurethan-Einkomponenten-Einbrennlacke bestehend aus total oder partiell mit an sich bekannten Blockierungsmitteln blockierten isocyanurat- oder urethangruppenaufweisenden Polyisocyanaten auf Basis von 2-Methyl-1, 5-diisocyanatopentan (MPDI) oder einem Gemisch aus MPDI und 2-Ethyl-1, 4-diisocyanatobutan (EBDI) und hydroxylgruppenhaltigen Polyestern auf der Basis von überwiegend aromatischen Dicarbonsäuren, Diolen und Triolen sowie gegebenenfalls üblichen Zuschlagstoffen.

Zur Herstellung von bei gewöhnlicher Temperatur haltbaren Mischungen aus Polyisocyanaten und Polyoxyverbindungen verwendet man bekanntlich Polyisocyanate, deren reaktionsfähige Gruppen durch Umsetzung mit monofunktionellen Verbindungen verschlossen sind und allgemein als verkappte oder blockierte Polyisocyanate bezeichnet werden. Derartige Produkte werden beispielsweise in den Annalen, Band 562 (1949), Seiten 205 bis 229, beschrieben.

Durch Einwirkung höherer Temperaturen spalten sie wieder in ihre Ausgangskomponenten zurück, wobei die nun freiwerdenden Isocyanatgruppen ihrerseits mit den in der Reaktionsmischung vorliegenden Polyoxyverbindungen reagieren können.

Sollen diese Mischungen aus blockierten Polyisocyanaten und Polyoxyverbindungen zur Beschichtung von Gegenständen im Spritz- oder Gießverfahren sowie das Beschichten von Blechen mit Hilfe der Walzenlackierung, speziell nach dem Coil-Coating-Verfahren, appliziert werden, müssen sowohl der Vernetzer als auch das Harz in den üblichen Lacklösungsmitteln löslich und auch lagerstabil sein.

Mit nur wenigen Ausnahmen sind mit ε-Caprolactam- oder mit Acetonoxim blockierte aliphatische Polyisocyanate in den lacküblichen Lösungsmitteln unverträglich. Sie scheiden daher als Ausgangskomponente für die Herstellung von PUR-Einkomponenten-Einbrennlacken zum Überziehen von vorzugsweise metallischen Gegenständen mit hochverformbaren Beschichtungen aus.

Bereits die Herstellung von mit ε-Caprolactam oder Acetonoxim blockiertem Hexamethylendiisocyanat (HDI) in lacküblichen Lösungsmitteln scheitert an der Unverträglichkeit. Diese Produkte fallen bereits während bzw. kurze Zeit nach der Umsetzung aus. Selbst die partielle Blockierung von HDI und anschließende Umsetzung mit den Polyoxyverbindungen vermag den Lacklösungen nur eine kurzzeitige Lagerstabilität zu verleihen. Eine Verbesserung, für die Praxis allerdings noch nicht ausreichend, kann durch die Verwendung von blockiertem HDI-Isocyanurat erzielt werden. Die Verträglichkeit mit den in PUR-Lacken allgemein verwendeten Polyhydroxylverbindungen ist nur bedingt gegeben und insbesondere in unpolaren Lösungsmitteln, wie Testbenzin, ist die Löslichkeit begrenzt. Ein weiterer Nachteil dieser HDI-Isocyanurate ist ihre begrenzte Thermo- und Oxidationsstabilität, die sich in praxi beim Überbrennen, z. B. hervorgerufen durch Bandstillstand während des Härtungsprozesses, als ausgesprochen störend erweist ; Qualitätseinbußen, wie z. B. Verfärbung der Lackfilme, sind die Folge.

So beinhaltet EP-A 607 ein Verfahren zur Herstellung lösungsmittelhaltiger Polyurethanlacke für die Metallbandlackierung, bei dem bestimmte Polyester mit mittels Acetonoxim blockierten cycloaliphatischen Diisocyanaten umgesetzt werden. Dabei werden monomere Diisocyanate, insbesondere IPDI bzw. Uretdion, davon auch im Gemisch mit Trimerisaten oder anderen Addukten eingesetzt, was zur Erhöhung der Verträglichkeit bzw. Lagerstabilität beiträgt, siehe vorstehenden Absatz. Reines IPDI-Isocyanurat, Acetonoxim blockiert, kann hier allerdings nicht eingesetzt werden, da es aufgrund zu hoher T-Bend-Werte im Hinblick auf Flexibilität für Metallbandlackierungen ungeeignet ist.

Es wurde nun überraschenderweise gefunden, daß diese Nachteile bei Verwendung von total oder partiell mit an sich bekannten Blockierungsmitteln blockierten isocyanurat- oder urethangruppenaufweisenden Polyisocyanaten auf der Basis von 2-Methyl-1,5-diisocyanatopentan (MPDI) oder einem Gemisch aus diesem und 2-Ethyl-1,4-diisocyanatobutan (EBDI), wobei das Diisocyanatgemisch folgende Zusammensetzung aufwies :

88 bis 99 Gew.- % 2-Methyl-1,5-diisocyanatopentan (MPDI)
12 bis 1 Gew.- % 2-Ethyl-1,4-diisocyanatobutan (EBDI)

behoben werden.

Gegenstand der Erfindung sind daher Lösungsmittelhaltige Einkomponenten-Einbrennlacke aus hydroxylgruppenhaltigen Polyestern und aliphatischen Polyisocyanaten sowie üblichen Zuschlagstoffen, die dadurch gekennzeichnet sind, daß als Polyisocyanatkomponente total oder partiell blockiertes 2-Methyl-1,5-diisocyanatopentan oder Gemische aus 88 bis 99 Gew.- % 2-Methyl-1,5-diisocyanatopentan und 12 bis 1 Gew.- % 2-Ethyl-1,4-diisocyanatobutan gemäß den Formeln I und II

$O=C=N-CH_2-CH-CH_2-CH_2-CH_2-N=C=O$ (MPDI) (I)
|
$CH_3$

$O=C=N-CH_2-CH_2-CH-CH_2-N-C=O$ (EBDI) (II)
|
$C_2H_5$

in Form des Trimerisats oder des Umsetzungsproduktes mit Diolen und/oder Triolen, gegebenenfalls zusammen mit monomerem MPDI oder MPDI/EBDI-Gemisch, eingesetzt wird, und die nichtblockierten Verbindungen einen NCO-Gehalt von 10 bis 45 Gew.-%, die blockierten einen NCO-Gehalt von ≤ 8, vorzugsweise ≤ 6, aufweisen.

Die erfindungsgemäß eingesetzten Verbindungen weisen einen NCO-Gehalt von 10 bis 45 Gewichtsprozent auf, der durch totale oder partielle Blockierung mit an sich bekannten Blockierungsmitteln auf bis ≤ 8, vorzugsweise auf bis ≤ 6 Gewichtsprozent herabgesetzt wird. Die erfindungsgemäßen Härter werden in Verbindung mit hydroxylgruppenhaltigen Polyestern auf der Basis von überwiegend aromatischen Dicarbonsäuren, Diolen und Triolen umgesetzt. Derartige Gemische werden in lacküblichen Lösungsmitteln, gegebenenfalls unter Zumischung der in der PUR-Chemie gebräuchlichen Zusätze gelöst, nach dem bekannten Verfahren auf die zu beschichtenden Gegenstände appliziert und durch thermische Behandlung zwischen 120 und 350 °C, vorzugsweise zwischen 140 und 300 °C ausgehärtet. Das Mischungsverhältnis der Bindemittelkomponenten läßt sich in weiten Grenzen verändern. Die besten lacktechnischen Kenndaten werden erzielt, wenn das Bindemittelgemisch aus 50 bis 90 Gewichtsprozent des Polyesters und aus 50 bis 10 Gewichtsprozent des Vernetzers besteht, wobei das OH/NCO-Verhältnis von 1 : 0,8 bis 1 : 1,2, vorzugsweise 1 : 0,95 bis 1 : 1,1 variiert werden kann. Besonders empfehlenswert ist, pro OH-Äquivalent der Polyhydroxyverbindung ein Äquivalent NCO des Vernetzers einzusetzen.

Das Trimerisat kann zusätzlich MPDI oder ein Gemisch aus MPDI und EBDI enthalten und einen mittleren NCO-Gehalt von 10 bis 45 Gewichtsprozent, vorzugsweise 20 bis 40 Gewichtsprozent besitzen, der durch das Blockieren mit an sich bekannten Blockierungsmitteln auf bis ≤ 8 Gewichtsprozent, vorzugsweise von bis ≤ 6 Gewichtsprozent NCO herabgesetzt wird. Die Trimerisierung läßt sich in bekannter Weise z. B. nach den Angaben in der GB-PS 1 391 066, DE-OS 23 25 826, DE-OS 26 44 684 oder DE-OS 29 16 201 durchführen.

Die Trimerisierung kann in Substanz oder in inerten organischen Lösungsmitteln vorgenommen werden. Die katalytische Reaktion sollte abgebrochen werden, sobald der NCO-Gehalt der Mischung erkennen läßt, daß 10 bis 50 % der NCO-Gruppen sich umgesetzt haben. Das nicht umgesetzte Diisocyanat bzw. Diisocyanatgemisch wird anschließend gemeinsam mit dem Katalysator abgetrennt.

Das so erhaltene Isocyanurat des MPDI bzw. des MPDI/EBDI-Gemisches kann gegebenenfalls durch Zumischen von monomeren MPDI oder MPDI/EBDI-Gemisch oder auf den jeweils gewünschten NCO-Gehalt eingestellt und anschließend blockiert werden.

Die Trimerisierung kann auch in situ bis zum gewünschten NCO-Gehalt, also auch partiell, durchgeführt werden.

Die erfindungsgemäß eingesetzten Verbindungen können auch aus urethangruppenhaltigem MPDI oder MPDI/EBDI-Gemisch bestehen, die einen mittleren NCO-Gehalt von 10 bis 40 Gewichtsprozent besitzen, der durch das Blockieren mit an sich bekannten Blockierungsmitteln auf bis ≤ 8 Gewichtsprozent, vorzugsweise auf bis ≤ 6 Gewichtsprozent NCO herabgesetzt wird.

Zur Urethangruppenbildung im Addukt dienen niedermolekulare Di- und Polyole, wie beispielsweise Ethylenglykol, 1,4-Butandiol, 1,6-Hexandiol, Neopentylglykol, Hydroxypivalinsäureneopentylglykolester, 1,4-Dihydroxymethylcyclohexan, 2,4,4-(2,2,4)-Trimethylhexandiol, Diethylen- und Triethylenglykol, Diethanolmethylamin, Triethanolamin, Trimethylolpropan und -ethan sowie Pentaerythrit. Die Reaktionspartner werden dabei vorzugsweise in solchen Gewichtsrelationen eingesetzt, daß pro OH-Gruppe des Polyols 2 NCO-Gruppen des MPDI oder des MPDI/EBDI-Gemisches kommen.

Bei allen erfindungsgemäß eingesetzten Verbindungen kann man durch den Anteil an reinem MPDI oder MPDI/EBDI-Gemisch die Eigenschaften der Verfahrensprodukte in einfacher Weise variieren. Durch die Erhöhung des Gehaltes an MPDI oder MPDI/EBDI-Gemisch kann die Viskosität gesenkt, der NCO-Gehalt und die Flexibilität erhöht werden.

Zur Durchführung der Blockierungsreaktion wird die Isocyanatkomponente vorgelegt und das Blockierungsmittel zugegeben. Die Umsetzung kann in Substanz bei 80 bis 120 °C oder auch in Gegenwart geeigneter inerter Lösungsmittel durchgeführt werden. Auch können für die Isocyanat-Polyadditionsreaktionen die in der PUR-Chemie üblichen Katalysatoren zugegeben werden in einer Menge von 0,001 bis 1 Gewichtsprozent, bezogen auf die Menge an Verbindungen mit gegenüber Isocyanaten reaktionsfähigen Wasserstoffatomen.

Geeignete Blockierungsmittel sind beispielsweise Phenole, wie Phenol, die Isomeren Kresole, Oxime wie Acetonoxim, Methylethylketoxim, Cyclohexanonoxim, Alkohole, wie Methanol, Ethanol, Isopropanol, tert. Butanol oder Cyclohexanol, Malonsäurediethylester, Acetessigsäureethylester, die verschiedenen Isomeren Triazole, 6-Methylpiperidon-2 und Lactame, wie δ-Valerolactam, insbesondere ε-Caprolactam.

Für die Blockierung in Lösungsmitteln kommen nur solche infrage, die mit den Polyisocyanaten nicht reagieren, beispielsweise Ketone, wie Aceton, Methylethylketon, Methylisobutylketon, Cyclopentanon und -hexanon oder Aromaten, wie Benzol, Toluol, Xylole, Chlorbenzol, Nitrotoluol, cyclische Ether, wie Tetrahydrofuran und Dioxan oder Ester, wie n-Butylacetat, n-Hexylacetat, Ethylglykolacetat und aliphatische Chlorkohlenwasserstoffe, wie Chloroform, Tetrachlorkohlenstoff sowie aprotische Lösungsmittel, wie Dimethylformamid, Dimethylsulfoxid u. a.

Die erfindungsgemäß eingesetzten Verbindungen werden bei ihrer Verwendung als Härter für Einkomponenten-Einbrennlacke mit den üblichen Harzen für lösungsmittelhaltige Einbrennlacke auf

Polyurethanbasis, d. h. vorzugsweise mit hydroxylgruppenhaltigen Harzen kombiniert.

Als hydroxylgruppenhaltige Harze eignen sich solche, die einen niedrigen Glasumwandlungspunkt von < 20 bis > — 25 °C besitzen und in den üblichen Lacklösungsmitteln verträglich sind, deren Hydroxylzahlen zwischen 30 und 300 mg KOH/g, vorzugsweise zwischen 70 und 150 mg KOH/g, deren Säurezahl < 2 mg KOH/g und deren mittleres Molekulargewicht zwischen 400 und 10 000, vorzugsweise zwischen 1 000 und 5 000 liegen.

Wesentliche Bestandteile dieser Polyester sind :

1. Cyclische Polycarbonsäuren und ihre Ester und Anhydride, z. B. Phthal-, Isophthal- und Terephthalsäure, Benzoltricarbonsäuren, Trimellithsäureanhydrid, Diethylterephthalat und ihre Hydrierungsprodukte.

2. Diole, z. B. Ethylenglykol, 1,2-Propandiol, 1,2- oder 1,3- oder 1,4-Butandiol, 3-Methylpentandiol-1,5, Hexandiol-1,6, Cyclohexandiol, 4,4'-Dihydroxydicyclohexylpropan-2,2, 1,4-Dihydroxymethylcyclohexan, Diethylenglykol, Triethylenglykol, Neopentylglykol, Hydroxypivalinsäureneopentylglykolester, 2,2,4-(2,4,4)-Trimethylhexandiol.

3. Polyole, wie Glycerin, Hexantriol, Pentaerythrit, Trimethylolpropan (TMP), Trimethylolethan.

Anteilmäßig können die Polyester auch monofunktionelle Carbonsäuren, wie z. B. Benzoesäure sowie acyclische Polycarbonsäuren, wie Adipinsäure, 2,2,4- (2,4,4)-Trimethyladipinsäure, Sebacin- oder Dodecandicarbonsäure enthalten.

Die Polyester werden in an sich bekannter Weise durch Verestern oder Umestern, gegebenenfalls in Gegenwart üblicher Katalysatoren hergestellt.

Für die erfindungsgemäßen Einkomponenten-Einbrennlacke geeignete Lösungsmittel sind solche, deren unterer Siedepunkt bei etwa 100 °C liegt. Die obere Grenze des Siedepunktes des Lösungsmittels ist von den jeweiligen Einbrennbedingungen abhängig. Wenn man bei höheren Temperaturen einbrennt, müssen auch die Siedepunkte der zu verwendenden Lösungsmittel bei höheren Temperaturen liegen. Als geeignete Lösungsmittel kommen unter anderem die bereits beschriebenen sowie z. B. Solvesso® 150 oder 200 (Aromatengemisch der Fa. Esso) infrage. Alle Lösungsmittel können auch als Gemische eingesetzt werden.

Die Konzentration des Harz-Vernetzer-Gemisches in den oben genannten Lösungsmitteln liegt zwischen 30 und 90 Gewichtsprozent, vorzugsweise zwischen 40 und 80 Gewichtsprozent.

Die erfindungsgemäßen Polyurethan-Einkomponenten-Einbrennlacke werden bei Verwendung der total blockierten Vernetzer durch Vermischen mit der Polyesterkomponente hergestellt, während bei Verwendung der partiell blockierten Vernetzer, die NCO mit den OH-Gruppen, gegebenenfalls in Gegenwart mit in der PUR-Chemie üblichen Katalysatoren, in einer Vorreaktion umgesetzt werden. Die Homogenisierung und gegebenenfalls Reaktion erfolgt zwischen 20 und 100 °C in dafür geeigneten Mischaggregaten. Anschließend können der Lacklösung auch die üblichen Zuschlagstoffe, wie Pigmente, Füllstoffe, Verlaufmittel, Entschäumer, Netzmittel und Stabilisatoren zugesetzt werden. In Sand- oder Kugelrührwerksmühlen werden diese Zuschlagstoffe abgerieben.

Die Einkomponenten-Einbrennlacke eignen sich für die Applikation insbesondere auf Metalloberflächen, aber auch auf Gegenständen aus anderen Materialien, wie Glas oder Kunststoffen. Die erfindungsgemäßen Lacke finden vor allem Anwendung in der Coil-Coating-Lackierung für witterungsbeständige Ein- und Zweischichtlackierungen.

Die Härtung der erfindungsgemäßen Lacke erfolgt je nach der Anwendung in einem Temperaturbereich von 120 bis 350 °C, vorzugsweise zwischen 140 und 300 °C, in einer Zeit von 30 Minuten bis 30 Sekunden. Die Lackfilme weisen hervorragende lacktechnische Kenndaten, insbesondere hohe Flexibilität und Wetterstabilität auf.

Experimenteller Teil

A. Herstellung der total oder partiell blockierten Polyisocyanate

Beispiel 1

1 000 Gewichtsteile MPDI und 0,1 Gewichtsteile Katalysator (Triethylendiamin/Propylenoxid 1 :1) wurden unter intensivem Rühren miteinander bei 80 °C gemischt. Dabei trat sofort eine Wärmetönung auf, wobei die Temperatur des Reaktionsgemisches auf ca. 91 °C stieg. Bei dieser Temperatur wurde das Reaktionsgemisch noch 20 Minuten erhitzt. Während dieser Zeit fiel der NCO-Gehalt auf 38,2 Gewichtsprozent. Zur Entfernung des nicht umgesetzten MPDI wurde das Reaktionsgemisch bei 160 °C/0,1 mbar in einem Dünnschichtverdampfer destilliert. Das Reaktionsprodukt (Rückstand der Dünnschichtverdampfung) hatte einen NCO-Gehalt von 20,2 Gewichtsprozent und einen Monomergehalt von < 0,6 Gewichtsprozent. Die Viskosität betrug bei 25 °C 10 900 mPa · s.

1a) Zu 116,55 Gewichtsteilen MPDI-Isocyanurat in 120 Gewichtsteilen Lösungsmittel wurden bei 80 °C portionsweise 63,45 Gewichtsteile ε-Caprolactam so zugegeben, daß die Reaktionstemperatur

nicht über 120 °C anstieg. Nach beendeter ε-Caprolactamzugabe wurde noch weitere 2 Stunden bei 120 °C erhitzt.

| | |
|---|---|
| NCO-Gehalt (latent) | 7,84 Gew.-% |
| NCO-Gehalt (frei) | < 0,2 Gew.-% |

Die Auslaufzeit im DIN-4-Becher bei 20 °C der 60 %igen Lösung betrug :

| | | | |
|---|---|---|---|
| a) | n-Butylacetat (BA)/Xylol | 1 : 3 | 55 sec |
| b) | EGA/Xylol | 1 : 2 | 71 sec |
| c) | EGA/Solvesso® 150 | 1 : 2 | 134 sec |

1b) Durchführung wie in Beispiel la) jedoch mit 126 Gewichtsteilen MPDI-Isocyanurat und 54 Gewichtsteilen ε-Caprolactam

| | |
|---|---|
| NCO-Gehalt (latent) | 8,5 Gew.-% |
| NCO-Gehalt (frei) | 1,7 Gew.-% |

Die Auslaufzeit im DIN-4-Becher bei 20 °C der 60 %igen Lösung betrug :

| | | | |
|---|---|---|---|
| a) | EGA/Xylol | 1 : 2 | 49 sec |
| b) | EGA/Solvesso® 150 | 1 : 2 | 125 sec |

Xylol kann auch als technische Ware eingesetzt werden. Solvesso® 150 stellt ein Aromatengemisch (98 %) mit den Siedegrenzen 177 bis 206 °C dar und besitzt einen Taupunkt von mindestens 66 °C. Lieferant : ESSO

1c) Zu 111 Gewichtsteilen MPDI-Isocyanurat in 100 Gewichtsteilen Lösungsmittelgemisch wurden bei 80 °C und intensiver Rührung 39 Gewichtsteile Acetonoxim portionsweise so zugegeben, daß die Temperatur des Reaktionsgemisches nicht über 100 °C anstieg. Nach beendeter Acetonoximzugabe wurde das Reaktionsgemisch noch weitere 2 Stunden bei 100 °C erhitzt.

| | |
|---|---|
| NCO-Gehalt (latent) | 8,96 Gew.-% |
| NOC-Gehalt (frei) | < 0,1 Gew.-% |

Die Auslaufzeit im DIN-4-Becher bei 20 °C der 60 %igen Lösung betrug :

| | | | |
|---|---|---|---|
| a) | BA/Xylol | 1 : 3 | 127 sec |
| b) | EGA/Xylol | 1 : 2 | 148 sec |
| c) | EGA/Solvesso® 150 | 1 : 2 | 279 sec |

1d) Durchführung wie in Beispiel 1c) jedoch mit 116,8 Gewichtsteilen MPDI-Isocyanurat und 33,2 Gewichtsteilen Acetonoxim.

| | |
|---|---|
| NCO-Gehalt (latent) | 9,43 Gew.-% |
| NOC-Gehalt (frei) | 1,8 Gew.-% |

Die Auslaufzeit im DIN-4-Becher bei 20 °C der 60 %igen Lösung betrug :

| | | | |
|---|---|---|---|
| a) | BA/Xylol | 1 : 3 | 64 sec |
| b) | EGA/Xylol | 1 : 2 | 87 sec |

Beispiel 2

Entsprechend dem in Beispiel A.1 beschriebenen Verfahren wurden 500 Gewichtsteile MPDI/EBDI-Gemisch (94 : 6) trimerisiert. Das nach der Dünnschichtdestillation isolierte Isocyanatoisocyanurat hatte einen NCO-Gehalt von 19,97 Gewichtsprozent und einen Monomergehalt von < 0,7 Gewichtsprozent. Die Viskosität betrug bei 25 °C 10 500 mPa · s.

2a) bis d)

Die Durchführung der Blockierungsreaktion erfolgte wie in den Beispielen A.1a) und A.1c) beschrieben. Konzentration der Vernetzerlösungen lag bei 60 Gewichtsprozent.

| Beispiele | A2a | A2b | A2c | A2d |
|---|---|---|---|---|
| Gew.-T. gem. A.2 | 390,1 | 421,6 | 445,2 | 468,5 |
| Gew.-T. Caprolactam | 209,9 | 178,4 | - | - |
| Gew.-T. Acetonoxim | - | - | 154,8 | 131,5 |
| NCO-Gehalt (latent) Gew.-% | 7,8 | 8,4 | 8,9 | 9,36 |
| NCO-Gehalt (frei) Gew.-% | < 0,1 | 1,78 | < 0,1 | 1,82 |
| Auslaufzeit im DIN-4-Becher bei 20 °C | | | | |
| BA/Xylol 1:3 sec | 60 | - | 134 | 75 |
| EGA/Xylol 1:2 sec | 78 | 53 | 159 | 103 |
| EGA/Solvesso® 150 1:2 sec | 145 | 129 | 285 | - |

Beispiel 3

Entsprechend dem in Beispiel A.1 beschriebenen Verfahren wurden 500 Gewichtsteile MPDI/EBDI-Gemisch partiell bis zu einem NCO-Gehalt von 32 Gewichtsprozent trimerisiert. Zur Desaktivierung des Katalysators wurde eine halbe Stunde bei 260 Pa evakuiert. Nach Abkühlen hatte die Reaktionsmischung einen NCO-Gehalt von 28 Gewichtsprozent. Die Viskosität betrug bei 25 °C 550 mPa · s.

3a) bis d)

Die Durchführung der Blockierungsreaktion erfolgte wie in den Beispielen A.1a) und A.1c) beschrieben. Die Konzentration der Vernetzerlösungen lag bei 60 Gewichtsprozent.

| Beispiele | A3a | A3b | A3c | A3d |
|---|---|---|---|---|
| Gew.-T. gem. A.3 | 341,9 | 369,6 | 403,4 | 424,4 |
| Gew.-T. Caprolactam | 258,1 | 230,4 | - | - |
| Gew.-T. Acetonoxim | - | - | 196,6 | 175,6 |
| NCO-Gehalt (latent) Gew.-% | 9,6 | 10,35 | 11,3 | 11,9 |
| NCO-Gehalt (frei) Gew.-% | < 0,1 | 1,8 | < 0,1 | 1,77 |
| Auslaufzeit im DIN-4-Becher bei 20 °C | | | | |
| BA/Xylol 1:3 sec | - | - | 78 | 41 |
| EGA/Xylol 1:2 sec | 31 | 26 | 101 | 58 |
| EGA/Solvesso® 150 1:2 sec | 101 | 84 | - | - |

Beispiel 4

Entsprechend dem in Beispiel A.1 beschriebenen Verfahren wurden 500 Gewichtsteile MPDI/EBDI-Gemisch partiell bis zu einem NCO-Gehalt von 39,3 Gewichtsprozent trimerisiert. Zur Desaktivierung des

Katalysators wurde eine halbe Stunde bei 260 Pa evakuiert. Nach Abkühlen hatte die Reaktionsmischung einen NCO-Gehalt von 35 Gewichtsprozent. Die Viskosität betrug bei 25 °C 37 mPa · s.

4a) bis d)

Die Durchführung der Blockierungsreaktion erfolgte wie in den Beispielen A.1a) und A.1c) beschrieben. Die Konzentration der Vernetzerlösung lag bei 60 Gewichtsprozent.

| Beispiele | A4a | A4b | A4c | A4d |
|---|---|---|---|---|
| Gew.-T. gem. A.4 | 61,76 | 66,74 | 74,58 | 78,46 |
| Gew.-T. Caprolactam | 58,24 | 53,26 | - | - |
| Gew.-T. Acetonoxim | - | - | 45,42 | 41,54 |
| NCO-Gehalt (latent) Gew.-% | 10,8 | 11,7 | 13,05 | 13,7 |
| NCO-Gehalt (frei) Gew.-% | < 0,1 | 1,81 | < 0,1 | 1,78 |
| Auslaufzeit im DIN-4-Becher bei 20 °C | | | | |
| BA/Xylol 1:3 sec | - | - | 32 | 21 |
| EGA/Xylol 1:2 sec | 21 | 18 | 58 | 40 |
| EGA/Solvesso® 150 1:2 sec | 62 | 46 | - | - |

Beispiel 5

Zu 650 Gewichtsteilen MPDI/EBDI-Gemisch wurden bei 80 °C unter heftigem Rühren portionsweise 134 Gewichtsteile Trimethylolpropan zugesetzt. Nach der Zugabe wurde das Reaktionsgemisch noch eine Stunde bei 100 °C erhitzt. Anschließend wurde das nicht umgesetzte Diisocyanat durch Dünnschichtdestillation bei 160 °C/0,1 mbar entfernt. Das Reaktionsprodukt (Rückstand) hatte einen NCO-Gehalt von 17,1 Gewichtsprozent und einen Monomergehalt < 0,7 Gewichtsprozent. Die Viskosität bei 40 °C lag bei 105 000 mPa · s.

5a) bis d)

Die Durchführung der Blockierungsreaktion erfolgte wie in den Beispielen A.1a) und A.1c) beschrieben. Die Konzentration der Vernetzerlösungen lag bei 60 Gewichtsprozent.

| Beispiele | A5a | A5b | A5c | A5d |
|---|---|---|---|---|
| Gew.-T. gem. A.5 | 164,24 | 177,72 | 136,69 | 145,92 |
| Gew.-T. Caprolactam | 75,76 | 62,28 | - | - |
| Gew.-T. Acetonoxim | - | - | 41,31 | 34,08 |
| NCO-Gehalt (latent) Gew.-% | 7 | 7,6 | 7,9 | 8,32 |
| NCO-Gehalt (frei) Gew.-% | < 0,1 | 1,8 | < 0,1 | 1,76 |
| Auslaufzeit im DIN-4-Becher bei 20 °C | | | | |
| BA/Xylol 1:3 sec | - | - | nicht meßbar | nicht meßbar |
| EGA/Xylol 1:2 sec | 211 | 200 | | |
| EGA/Solvesso® 150 1:2 sec | 374 | 331 | - | - |

Beispiel 6

Zu 290,5 Gewichtsteilen MPDI/EBDI-Gemisch wurden bei 80 °C unter heftigem Rühren portionsweise 59,5 Gewichtsteile Trimethylolpropan zugesetzt. Nach beendeter TMP-Zugabe wurde die Reaktionsmischung noch 1 Stunde bei 100 °C erhitzt. Das Reaktionsprodukt hatte einen NCO-Gehalt von 25,4 Gewichtsprozent und eine Viskosität bei 25 °C von 2 650 mPa · s.

6a) bis d)

Die Durchführung der Blockierungsreaktion erfolgte wie in den Beispielen A.1a) und A.1c) beschrieben. Die Konzentration der Vernetzerlösungen lag bei 60 Gewichtsprozent.

| Beispiele | A6a | A6b | A6c | A6d |
|---|---|---|---|---|
| Gew.-T. gem. A.6 | 71,12 | 76,92 | 83,12 | 87,44 |
| Gew.-T. Caprolactam | 48,88 | 43,08 | - | - |
| Gew.-T. Acetonoxim | - | - | 36,88 | 32,56 |
| NCO-Gehalt (latent) Gew.-% | 9,1 | 9,8 | 10,58 | 11,15 |
| NCO-Gehalt (frei) Gew.-% | < 0,1 | 1,82 | < 0,1 | 1,77 |
| Auslaufzeit im DIN-4-Becher bei 20 °C | | | | |
| BA/Xylol 1:3 sec | - | - | 212 | 189 |
| EGA/Xylol 1:2 sec | 58 | 49 | 375 | 311 |
| EGA/Solvesso® 150 1:2 sec | 85 | 65 | - | - |

Beispiel 7

Zu 306,3 Gewichtsteilen MPDI/EBDI-Gemisch wurden bei 80 °C unter heftigem Rühren portionsweise 43,7 Gewichtsteile Trimethylolpropan zugesetzt. Nach beendeter TMP-Zugabe wurde die Reaktionsmischung noch 1 Stunde bei 100 °C erhitzt. Das Reaktionsprodukt hatte einen NCO-Gehalt von 32 Gewichtsprozent und eine Viskosität bei 25 °C von 158 mPa · s.

7a) bis d)

Die Durchführung der Blockierungsreaktion erfolgte wie in den Beispielen A.1a) und A.1c) beschrieben. Die Konzentration der Vernetzerlösung lag bei 60 Gewichtsprozent.

| Beispiele | A7a | A7b | A7c | A7d |
|---|---|---|---|---|
| Gew.-T. gem. A.7 | 64,42 | 69,66 | 77,08 | 81,10 |
| Gew.-T. Caprolactam | 55,58 | 50,34 | - | - |
| Gew.-T. Acetonoxim | - | - | 42,92 | 38,90 |
| NCO-Gehalt (latent) Gew.-% | 10,3 | 11,14 | 12,3 | 13 |
| NCO-Gehalt (frei) Gew.-% | < 0,1 | 1,8 | < 0,1 | 1,82 |
| Auslaufzeit im DIN-4-Becher bei 20 °C | | | | |
| BA/Xylol 1:3 sec | - | - | 115 | 91 |
| EGA/Xylol 1:2 sec | 31 | 20 | 169 | 124 |
| EGA/Solvesso® 150 1:2 sec | 37 | 27 | - | - |

B. Polyester

1. 7 Mol (1 162 g) Isophthalsäure, 2 Mol (268 g) Trimethylolpropan, 5 Mol (590 g) Hexandiol-1,6 und 1 Mol (160 g) 2,2,4- bzw. 2,4,4-Trimethylhexandiol-1,6 wurden in einem 4-1-Glaskolben zur Veresterung gebracht. Als Veresterungskatalysator wurden 0,05 Gewichtsprozent Di-n-butyl-zinn-oxid eingesetzt. Bei ca. 190 °C kam es zur ersten Wasserabspaltung. Innerhalb von 6 bis 8 Stunden wurde die Temperatur auf 220 °C erhöht. Die Veresterung wurde innerhalb 6 Stunden bei 220 °C zu Ende geführt. Der Polyester wurde auf 200 °C abgekühlt und durch Anlegen von Vakuum (15 bis 30 mbar) innerhalb 30 bis 45 Minuten weitgehend von flüchtigen Anteilen befreit. Während der gesamten Reaktion wurde ein schwacher $N_2$-Strom durch das Reaktionsgemisch geleitet.

Physikalische Kenndaten

| | |
|---|---|
| OH-Zahl : | 90 bis 105 mg KOH/g |
| Säurezahl : | < 2 mg KOH/g |
| Glasumwandlungstemperatur (DTA) : | + 4 bis + 12 °C |

Die Auslaufzeit im DIN-4-Becher bei 20 °C der 60 %igen Lösung in

| | | |
|---|---|---|
| a) Butylacetat/Xylol | 1 : 3 | 405 sec |
| b) EGA/Xylol | 1 : 2 | 573 sec |
| c) EGA/Solvesso® 150 | 1 : 2 | 1 006 sec |

2. 7 Mol (1 162 g) Isophthalsäure, 6 Mol (708 g) Hexandiol-1,6 und 2 Mol (268 g) Trimethylolpropan wurden wie in Beispiel B.1 beschrieben bis zu einer Säurezahl < 2 mg KOH/g verestert.

Physikalische Daten

| | |
|---|---|
| OH-Zahl : | 100 bis 105 mg KOH/g |
| Säurezahl : | < 2 mg KOH/g |
| Glasumwandlungstemperatur (DTA) : | + 4 bis + 12 °C |

Die Auslaufzeit im DIN-4-Becher bei 20 °C der 60 %igen Lösung in

| | | |
|---|---|---|
| a) Butylacetat/Xylol | 1 : 3 | 525 sec |
| b) EGA/Xylol | 1 : 2 | 657 sec |
| c) EGA-Solvesso® 150 | 1 : 2 | 1 133 sec |

3. 7 Mol (1 162 g) Isophthalsäure, 5 Mol (590 g) Hexandiol-1,6, 1 Mol 3-Methyl-pentandiol-1,5 und 2 Mol (268 g) Trimethylolpropan wurden gemäß B.1 bis zur Säurezahl 2 mg KOH/g verestert.

Physikalische Daten

| | |
|---|---|
| OH-Zahl : | 95 bis 105 mg KOH/g |
| Säurezahl : | < 2 mg KOH/g |
| Glasumwandlungstemperatur (DTA) : | + 4 bis + 16 °C |

Die Auslaufzeit im DIN-4-Becher bei 20 °C der 60 %igen Lösung in

| | | |
|---|---|---|
| a) Butylacetat/Xylol | 1 : 3 | 300 sec |
| b) EGA/Xylol | 1 : 2 | 470 sec |
| c) EGA/Solvesso® 150 | 1 : 2 | 751 sec |

4. 7 Mol (1 162 g) Isophthalsäure, 5 Mol (590 g) Hexandiol-1,6, 1 Mol (104 g) Neopentylglykol und 2 Mol (268 g) Trimethylolpropan wurden wie in Beispiel B.1 beschrieben bis zu einer Säurezahl < 2 mg KOH/g verestert.

Physikalische Daten

| | |
|---|---|
| OH-Zahl : | 100 bis 105 mg KOH/g |
| Säurezahl : | < 2 mg KOH/g |
| Glasumwandlungstemperatur (DTA) : | + 2 bis + 12 °C |

Die Auslaufzeit im DIN-4-Becher bei 20 °C der 60 gewichtsprozentigen Lösung ergibt in :

| | | | |
|---|---|---|---|
| a) | n-Butylacetat/Xylol (techn.) | 1 : 3 | 597 sec |
| b) | EGA/Xylol (techn.) | 1 : 2 | 704 sec |
| c) | EGA/Solvesso® 150 | 1 : 2 | 1 205 sec |

C. Polyurethan-Einkomponenten-Einbrennlacke

Für die Formulierungen der pigmentierten Lacksysteme wurden sowohl die beschriebenen 60 gewichtsprozentigen Isocyanatlösungen als auch die 60 gewichtsprozentigen Polyesterlösungen verwendet.

Beispiel 1

39,66 Gewichtsprozent Polyesterlösung gemäß B.2 wurden mit 22,84 Gewichtsprozent blockierter Isocyanatlösung gemäß A.2a) und 7 Gewichtsprozent Lösungsmittel gemischt und anschließend mit 29,4 Gewichtsprozent Weißpigment ($TiO_2$), 0,1 Gewichtsprozent Verlaufmittel (Siliconöl der Fa. Bayer AG), 1 Gewichtsprozent Entschäumer (Bykspezial der Fa. Byk-Mallinkrodt) in der Kugelrührwerksmühle abgerieben.

Die Applikation erfolgte auf 1 mm Stahl- und Aluminiumbleche und die Aushärtung wurde in einem Umlufttrockenschrank durchgeführt. Härtungstemperaturen betrugen 150 bis 300 °C.

Die Abkürzungen in den folgenden Tabellen bedeuten :

HK = Härte n. König (in sec) (DIN 53 157)
HB = Härte n. Buchholz (DIN 53 153)
ET = Tiefung n. Erichsen (in mm) (DIN 53 156)
GS = Gitterschnittprüfung (DIN 53 151)
GG 20 und = Messung des Glanzes n. Gardner (ASTM-D 523)
60 ° <
Imp. rev. = Impact reverse (g · m)

| Härtungsbedingungen | Mechanische Kenndaten | | | | | | | |
|---|---|---|---|---|---|---|---|---|
| Zeit / Temp. min. / °C | HK | HB | ET | Imp. rev. | T-Bend-Test | Bleist. härte | GS | GG 60 °% | GG 20 °% |
| 1,5 / 300 | 185 | 125 | > 10 | >944,64 | 0 | 2 H | 0 | 88 | 67 |
| 7 / 200 | 179 | 125 | > 10 | >944,64 | 0 - 1 | 2 H | 0 | 87 | 69 |
| 10 / 200 | 182 | 125 | > 10 | >944,64 | 0 | 2 H | 0 | 89 | 70 |
| 20 / 180 | 180 | 125 | > 10 | >944,64 | 0 | 2 H | 0 | 86 | 68 |
| 30 / 170 | 178 | 125 | > 10 | >944,64 | 0 - 1 | 2 H | 0 | 87 | 67 |

Die Schichtdicke der Lackfilme betrug 25 bis 30 µm.

Die Lagerstabilität der erfindungsgemäßen Lacklösungen war nach neunmonatiger Lagerung sowohl bei Raumtemperatur als auch bei + 5 °C gegeben.

Beispiel 2

Die Herstellung und Applikation sowie Härtung des Lackes erfolgte gemäß C.1.

Rezeptur :

40,72 Gew.-% Polyesterlösung gemäß B.2
21,78 Gew.-% Vernetzerlösung gemäß A.2b)
7,0 Gew.-% Lösungsmittelgemisch gem. der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

| Härtungsbedingungen | Mechanische Kenndaten | | | | | | | | |
|---|---|---|---|---|---|---|---|---|---|
| Zeit / Temp. min. / °C | HK | HB | ET | Imp. rev. | T-Bend-Test | Bleist. härte | GS | GG 60 °% | GG 20 °% |
| 1,5 / 300 | 188 | 125 | > 10 | >944,64 | 0 | 2 H | 0 | 89 | 68 |
| 7 / 200 | 187 | 125 | > 10 | >944,64 | 0 | 2 H | 0 | 87 | 68 |
| 10 / 200 | 189 | 125 | > 10 | >944,64 | 0 | 2H - 3H | 0 | 89 | 71 |
| 20 / 180 | 184 | 125 | > 10 | >944,64 | 0 | 2 H | 0 | 90 | 70 |
| 30 / 170 | 185 | 111 | > 10 | >944,64 | 0 - 1 | 2 H | 0 | 88 | 67 |

Die Schichtdicke der Lackfilme betrug 25 bis 30 µm.

Beispiel 3

Die Herstellung und Applikation sowie Härtung des Lackes erfolgte gemäß C.1.

Rezeptur :

40,89 Gew.-% Polyesterlösung gemäß B.2
21,61 Gew.-% Vernetzerlösung gemäß A.1b)
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

(Siehe Tabelle Seite 12 f.)

| Härtungs-bedingungen | Mechanische Kenndaten | | | | | | | | |
|---|---|---|---|---|---|---|---|---|---|
| Zeit / Temp. min. / °C | HK | HB | ET | Imp. rev. | T-Bend-Test | Bleist. härte | GS | GG 60 °∡ | GG 20 °∡ |
| 1,5 / 300 | 184 | 125 | > 10 | >944,64 | 0 | 2 H | 0 | 88 | 70 |
| 7 / 200 | 187 | 125 | > 10 | >944,64 | 0 - 1 | 2 H | 0 | 90 | 72 |
| 10 / 200 | 187 | 125 | > 10 | >944,64 | 0 | 2 H | 0 | 89 | 71 |
| 20 / 180 | 183 | 111 | > 10 | >944,64 | 0 | 2 H | 0 | 86 | 68 |
| 30 / 170 | 184 | 111 | > 10 | >944,64 | 0 | 2 H | 0 | 87 | 69 |

Die Schichtdicke der Lackfilme betrug 25 bis 30 µm.

Beispiel 4

Die Herstellung und Applikation sowie Härtung des Lackes erfolgte gemäß C.1.

Rezeptur :

41,45 Gew.-% Polyesterlösung gemäß B.3
21,05 Gew.-% Vernetzerlösung gemäß A.2b)
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

| Härtungs-bedingungen | Mechanische Kenndaten | | | | | | | | |
|---|---|---|---|---|---|---|---|---|---|
| Zeit / Temp. min. / °C | HK | HB | ET | Imp. rev. | T-Bend-Test | Bleist. härte | GS | GG 60 °∡ | GG 20 °∡ |
| 1,5 / 300 | 190 | 125 | > 10 | >944,64 | 0 | 2 H | 0 | 92 | 73 |
| 7 / 200 | 187 | 125 | > 10 | >944,64 | 0 - 1 | 2 H | 0 | 89 | 69 |
| 10 / 200 | 192 | 125 | > 10 | >944,64 | 0 | 2H - 3H | 0 | 91 | 71 |
| 20 / 180 | 190 | 125 | > 10 | >944,64 | 0 | 2 H | 0 | 90 | 70 |
| 30 / 170 | 188 | 125 | > 10 | >944,64 | 0 - 1 | 2 H | 0 | 90 | 70 |

Die Schichtdicke der Lackfilme betrug 25 bis 30 µm.

Beispiel 5

Die Herstellung und Applikation sowie Härtung des Lackes erfolgte gemäß C.1.

Rezeptur :

41,45 Gew.-% Polyesterlösung gemäß B.1
21,05 Gew.-% Vernetzerlösung gemäß A.2b)
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

| Härtungs-bedingungen | Mechanische Kenndaten | | | | | | | | |
|---|---|---|---|---|---|---|---|---|---|
| Zeit / Temp. min. / °C | HK | HB | ET | Imp. rev. | T-Bend-Test | Bleist. härte | GS | GG 60 °X | GG 20 °X |
| 1,5 / 300 | 172 | 111 | > 10 | >944,64 | 0 | H - 2 H | 0 | 86 | 68 |
| 7 / 200 | 170 | 111 | > 10 | >944,64 | 0 - 1 | H - 2 H | 0 | 88 | 67 |
| 10 / 200 | 175 | 125 | > 10 | >944,64 | 0 | 2 H | 0 | 95 | 64 |
| 20 / 180 | 176 | 111 | > 10 | >944,64 | 0 | 2 H | 0 | 87 | 68 |
| 30 / 170 | 172 | 111 | > 10 | >944,64 | 0 - 1 | H - 2 H | 0 | 82 | 65 |

Die Schichtdicke der Lackfilme betrug 25 bis 30 µm.

Beispiel 6

Die Herstellung und Applikation sowie Härtung des Lackes erfolgte gemäß C.1.

Rezeptur :

41,61 Gew.-% Polyesterlösung gemäß B.1
20,89 Gew.-% Vernetzerlösung gemäß A.1b)
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

(Siehe Tabelle Seite 14 f.)

| Härtungsbedingungen | Mechanische Kenndaten | | | | | | | | |
|---|---|---|---|---|---|---|---|---|---|
| Zeit / Temp. min. / °C | HK | HB | ET | Imp. rev. | T-Bend-Test | Bleistifthärte | GS | GG 60 °ɣ | GG 20 °ɣ |
| 1,5 / 300 | 173 | 111 | > 10 | >944,64 | 0 | H - 2H | 0 | 87 | 71 |
| 7 / 200 | 172 | 111 | > 10 | >944,64 | 0 - 1 | H - 2H | 0 | 83 | 68 |
| 10 / 200 | 174 | 111 | > 10 | >944,64 | 0 | 2H | 0 | 86 | 70 |
| 20 / 180 | 170 | 125 | > 10 | >944,64 | 0 - 1 | H - 2H | 0 | 85 | 73 |
| 30 / 170 | 174 | 111 | > 10 | >944,64 | 0 | 2H | 0 | 82 | 67 |

Die Schichtdicke der Lackfilme betrug 25 bis 30 µm.

Beispiel 7

Die Herstellung und Applikation sowie Härtung des Lackes erfolgte gemäß C.1.

Rezeptur :

43,58 Gew.-% Polyesterlösung gemäß B.2
18,92 Gew.-% Vernetzerlösung gemäß A.3b)
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL).

| Härtungsbedingungen | Mechanische Kenndaten | | | | | | | | |
|---|---|---|---|---|---|---|---|---|---|
| Zeit / Temp. min. / °C | HK | HB | ET | Imp. rev. | T-Bend-Test | Bleistifthärte | GS | GG 60 °ɣ | GG 20 °ɣ |
| 1,5 / 300 | 170 | 111 | > 10 | >944,64 | 0 - 1 | H - 2H | 0 | 86 | 67 |
| 7 / 200 | 167 | 111 | > 10 | >944,64 | 0 | H | 0 | 84 | 65 |
| 10 / 200 | 171 | 125 | > 10 | >944,64 | 0 - 1 | H - 2H | 0 | 87 | 68 |
| 20 / 180 | 168 | 111 | > 10 | >944,64 | 0 | H | 0 | 83 | 66 |
| 30 / 170 | 165 | 111 | > 10 | >944,64 | 0 - 1 | H | 0 | 84 | 64 |

Die Schichtdicke der Lackfilme betrug 25 bis 30 µm.

Beispiel 8

Die Herstellung und Applikation sowie Härtung des Lackes erfolgte gemäß C.1.

Rezeptur :

42,93 Gew.-% Polyesterlösung gemäß B.4
19,57 Gew.-% Vernetzerlösung gemäß A.3b)
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

| Härtungsbedingungen | Mechanische Kenndaten | | | | | | | | |
|---|---|---|---|---|---|---|---|---|---|
| Zeit / Temp. min. / °C | HK | HB | ET | Imp. rev. | T-Bend-Test | Bleist. härte | GS | GG 60 °% | GG 20 °% |
| 1,5 / 300 | 180 | 125 | > 10 | >944,64 | 0 | 2H | 0 | 88 | 69 |
| 7 / 200 | 178 | 111 | > 10 | >944,64 | 0 - 1 | 2H | 0 | 91 | 71 |
| 10 / 200 | 181 | 125 | > 10 | >944,64 | 0 | 2H | 0 | 87 | 68 |
| 20 / 180 | 179 | 111 | > 10 | >944,64 | 0 | 2H | 0 | 89 | 68 |
| 30 / 170 | 177 | 111 | > 10 | >944,64 | 0 - 1 | H - 2H | 0 | 86 | 67 |

Die Schichtdicke der Lackfilme betrug 25 bis 30 µm.

Beispiel 9

Die Herstellung und Applikation sowie Härtung des Lackes erfolgte gemäß C.1.

Rezeptur :

44,54 Gew.-% Polyesterlösung gemäß B.4
17,96 Gew.-% Vernetzerlösung gemäß A.4b)
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

(Siehe Tabelle Seite 16 f.)

| Härtungs-bedingungen | Mechanische Kenndaten | | | | | | | | |
|---|---|---|---|---|---|---|---|---|---|
| Zeit / Temp. min. / °C | HK | HB | ET | Imp. rev. | T-Bend-Test | Bleist. härte | GS | GG 60 ° % | GG 20 ° % |
| 1,5 / 300 | 175 | 111 | > 10 | >944,64 | 0 | H - 2H | 0 | 85 | 67 |
| 7 / 200 | 173 | 111 | > 10 | >944,64 | 0 - 1 | H - 2H | 0 | 87 | 69 |
| 10 / 200 | 176 | 111 | > 10 | >944,64 | 0 | H - 2H | 0 | 84 | 65 |
| 20 / 180 | 172 | 111 | > 10 | >944,64 | 0 | H - 2H | 0 | 86 | 66 |
| 30 / 170 | 170 | 111 | > 10 | >944,64 | 0 - 1 | H - 2H | 0 | 83 | 64 |

Die Schichtdicke der Lackfilme betrug 25 bis 30 µm.

Beispiel 10

Die Herstellung und Applikation sowie Härtung des Lackes erfolgte gemäß C.1.

Rezeptur :

41,54 Gew.- % Polyesterlösung gemäß B.2
20,96 Gew.- % Vernetzerlösung gemäß A.2c)
7,0 Gew.- % Lösungsmittelgemisch gemäß der eingesetzten Lacklösung
29,4 Gew.- % Weißpigment ($TiO_2$)
1,0 Gew.- % Entschäumer (Byk-Spezial)
0,1 Gew.- % Verlaufmittel (Siliconöl OL)

| Härtungs-bedingungen | Mechanische Kenndaten | | | | | | | | |
|---|---|---|---|---|---|---|---|---|---|
| Zeit / Temp. min / °C | HK | HB | ET | Imp. rev. | T-Bend-Test | Bleist.-härte | GS | GG 60 ° % | GG 20 ° % |
| 7 / 200 | 180 | 125 | > 10 | >944,64 | 0 - 1 | H - 2H | 0 | 85 | 67 |
| 10 / 180 | 178 | 125 | > 10 | >944,64 | 0 | H - 2H | 0 | 88 | 67 |
| 14 / 170 | 176 | 111 | > 10 | >944,64 | 0 - 1 | H | 0 | 86 | 64 |
| 18 / 160 | 177 | 111 | > 10 | >944,64 | 0 - 1 | H | 0 | 84 | 65 |
| 23 / 150 | 175 | 111 | > 10 | >944,64 | 1 | H | 0 | 82 | 66 |

Die Schichtdicke der Lacke betrug 25 bis 30 µm.

Beispiel 11

Die Herstellung und Applikation sowie Härtung des Lackes erfolgte gemäß C.1.

Rezeptur :

42,23 Gew.- % Polyesterlösung gemäß B.2
20,27 Gew.- % Vernetzerlösung gemäß A.2d)
7,0 Gew.- % Lösungsmittelgemisch gemäß der eingesetzten Lacklösung
29,4 Gew.- % Weißpigment ($TiO_2$)
1,0 Gew.- % Entschäumer (Byk-Spezial)
0,1 Gew.- % Verlaufmittel (Siliconöl OL)

| Härtungs-bedingungen | Mechanische Kenndaten | | | | | | | | |
|---|---|---|---|---|---|---|---|---|---|
| Zeit / Temp. min / °C | HK | HB | ET | Imp. rev. | T-Bend-Test | Bleist.-härte | GS | GG 60° ⚡ | GG 20° ⚡ |
| 7 / 200 | 178 | 111 | > 10 | >944,64 | 0 | H - 2H | 0 | 85 | 66 |
| 10 / 180 | 180 | 125 | >10 | >944,64 | 0 - 1 | 2H | 0 | 83 | 64 |
| 14 / 170 | 176 | 111 | > 10 | >944,64 | 0 | H - 2H | 0 | 84 | 65 |
| 18 / 160 | 174 | 111 | > 10 | >944,64 | 0 | H | 0 | 81 | 62 |
| 23 / 150 | 175 | 111 | > 10 | >944,64 | 0 - 1 | H - 2H | 0 | 86 | 64 |

Die Schichtdicke der Lackfilme betrug 25 bis 30 µm.

Beispiel 12

Die Herstellung und Applikation sowie Härtung des Lackes erfolgte gemäß C.1.

Rezeptur :

42,33 Gew.- % Polyesterlösung gemäß B.2
20,17 Gew.- % Vernetzerlösung gemäß A.1d)
7,0 Gew.- % Lösungsmittelgemisch gemäß der eingesetzten Lacklösung
29,4 Gew.- % Weißpigment ($TiO_2$)
1,0 Gew.- % Entschäumer (Byk-Spezial)
0,1 Gew.- % Verlaufmittel (Siliconöl OL)

(Siehe Tabelle Seite 18 f.)

| Härtungs-bedingungen | Mechanische Kenndaten | | | | | | | | |
|---|---|---|---|---|---|---|---|---|---|
| Zeit / Temp. min / °C | HK | HB | ET | Imp. rev. | T-Bend-Test | Bleist.-härte | GS | GG 60 ° ∢ | GG 20 ° ∢ |
| 7 / 200 | 177 | 111 | > 10 | >944,64 | 0 | H | 0 | 84 | 63 |
| 10 / 180 | 176 | 111 | > 10 | >944,64 | 0 - 1 | H - 2H | 0 | 88 | 67 |
| 14 / 170 | 178 | 125 | > 10 | >944,64 | 0 | H - 2H | 0 | 85 | 66 |
| 18 / 160 | 175 | 111 | > 10 | >944,64 | 0 - 1 | H | 0 | 86 | 64 |
| 23 / 150 | 173 | 111 | > 10 | >944,64 | 0 - 1 | H | 0 | 87 | 67 |

Die Schichtdicke der Lackfilme betrug 25 bis 30 µm.

Beispiel 13

Die Herstellung und Applikation sowie Härtung des Lackes erfolgte gemäß C.1.

Rezeptur :

42,93 Gew.-% Polyesterlösung gemäß B.3
19,57 Gew.-% Vernetzerlösung gemäß A.2d)
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Silikonöl OL).

| Härtungs-bedingungen | Mechanische Kenndaten | | | | | | | | |
|---|---|---|---|---|---|---|---|---|---|
| Zeit / Temp. min / °C | HK | HB | ET | Imp. rev. | T-Bend-Test | Bleist.-härte | GS | GG 60 ° ∢ | GG 20 ° ∢ |
| 7 / 200 | 180 | 125 | > 10 | >944,64 | 0 - 1 | 2H | 0 | 85 | 68 |
| 10 / 180 | 182 | 125 | > 10 | >944,64 | 0 | 2H | 0 | 87 | 69 |
| 14 / 170 | 178 | 125 | > 10 | >944,64 | 0 | H - 2H | 0 | 86 | 67 |
| 18 / 160 | 177 | 111 | > 10 | >944,64 | 0 | H - 2H | 0 | 84 | 64 |
| 23 / 150 | 175 | 111 | > 10 | >944,64 | 0 - 1 | H - 2H | 0 | 83 | 65 |

Die Schichtdicke der Lackfilme betrug 25 bis 30 µm.

Beispiel 14

Die Herstellung und Applikation sowie Härtung des Lackes erfolgte gemäß C.1.

Rezeptur :

42,93 Gew.-% Polyesterlösung gemäß B.1
19,57 Gew.-% Vernetzerlösung gemäß A.2d)
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

| Härtungs-bedingungen | Mechanische Kenndaten | | | | | | | | |
|---|---|---|---|---|---|---|---|---|---|
| Zeit / Temp. min / °C | HK | HB | ET | Imp. rev. | T-Bend-Test | Bleist.-härte | GS | GG 60 ° ∢ | GG 20 ° ∢ |
| 7 / 200 | 170 | 111 | > 10 | >944,64 | 0 | H - 2H | 0 | 88 | 71 |
| 10 / 180 | 169 | 111 | > 10 | >944,64 | 0 - 1 | H - 2H | 0 | 84 | 67 |
| 14 / 170 | 172 | 111 | > 10 | >944,64 | 0 | H - 2H | 0 | 86 | 68 |
| 18 / 160 | 168 | 111 | > 10 | >944,64 | 0 - 1 | H | 0 | 87 | 68 |
| 23 / 150 | 167 | 111 | > 10 | >944,64 | 0 | H | 0 | 85 | 67 |

Die Schichtdicke der Lackfilme betrug 25 bis 30 µm.

Beispiel 15

Die Herstellung und Applikation sowie Härtung des Lackes erfolgte gemäß C.1.

Rezeptur :

43,03 Gew.-% Polyesterlösung gemäß B.1
19,47 Gew.-% Vernetzerlösung gemäß A.1d)
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

(Siehe Tabelle Seite 20 f.)

| Härtungsbedingungen | Mechanische Kenndaten | | | | | | | | |
|---|---|---|---|---|---|---|---|---|---|
| Zeit / Temp. min / °C | HK | HB | ET | Imp. rev. | T-Bend-Test | Bleist.-härte | GS | GG 60° ∢ | GG 20° ∢ |
| 7 / 200 | 168 | 111 | > 10 | >944,64 | 0 | H | 0 | 84 | 66 |
| 10 / 180 | 170 | 111 | > 10 | >944,64 | 0 | H - 2H | 0 | 82 | 62 |
| 14 / 170 | 167 | 111 | > 10 | >944,64 | 0 | H | 0 | 86 | 67 |
| 18 / 160 | 165 | 111 | > 10 | >944,64 | 0 | H | 0 | 85 | 64 |
| 23 / 150 | 166 | 111 | > 10 | >944,64 | 0 | H | 0 | 83 | 62 |

Die Schichtdicke der Lackfilme betrug 25 bis 30 µm.

Beispiel 16

Die Herstellung und Applikation sowie Härtung des Lackes erfolgte gemäß C.1.

Rezeptur :

44,76 Gew.-% Polyesterlösung gemäß B.4
17,74 Gew.-% Vernetzerlösung gemäß A.3d)
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

| Härtungsbedingungen | Mechanische Kenndaten | | | | | | | | |
|---|---|---|---|---|---|---|---|---|---|
| Zeit / Temp. min / °C | HK | HB | ET | Imp. rev. | T-Bend-Test | Bleist.-härte | GS | GG 60° ∢ | GG 20° ∢ |
| 7 / 200 | 168 | 111 | > 10 | >944,64 | 0 | H | 0 | 84 | 67 |
| 10 / 180 | 171 | 125 | > 10 | >944,64 | 0 - 1 | H - 2H | 0 | 86 | 68 |
| 14 / 170 | 169 | 111 | > 10 | >944,64 | 0 | H - 2H | 0 | 85 | 66 |
| 18 / 160 | 168 | 111 | > 10 | >944,64 | 0 - 1 | H - 2H | 0 | 87 | 67 |
| 23 / 150 | 165 | 111 | > 10 | >944,64 | 0 - 1 | H | 0 | 84 | 65 |

Die Schichtdicke der Lackfilme betrug 25 bis 30 µm.

Beispiel 17

Die Herstellung und Applikation sowie Härtung des Lackes erfolgte gemäß C.1.

Rezeptur :

45,37 Gew.- % Polyesterlösung gemäß B.3
17,13 Gew.- % Vernetzerlösung gemäß A.3d)
7,0 Gew.- % Lösungsmittelgemisch gemäß der eingesetzten Lacklösung
29,4 Gew.- % Weißpigment ($TiO_2$)
1,0 Gew.- % Entschäumer (Byk-Spezial)
0,1 Gew.- % Verlaufmittel (Siliconöl OL)

| Härtungs-bedingungen | Mechanische Kenndaten | | | | | | | | |
|---|---|---|---|---|---|---|---|---|---|
| Zeit / Temp. min / °C | HK | HB | ET | Imp. rev. | T-Bend-Test | Bleist.-härte | GS | GG 60° % | GG 20° % |
| 7 / 200 | 171 | 125 | > 10 | >944,64 | 0 | 2H | 0 | 88 | 70 |
| 10 / 180 | 169 | 111 | > 10 | >944,64 | 0-1 | H - 2H | 0 | 85 | 68 |
| 14 / 170 | 171 | 125 | > 10 | >944,64 | 0-1 | H - 2H | 0 | 86 | 67 |
| 18 / 160 | 167 | 111 | > 10 | >944,64 | 0 | H - 2H | 0 | 84 | 66 |
| 23 / 150 | 168 | 111 | > 10 | >944,64 | 0-1 | H | 0 | 87 | 68 |

Die Schichtdicke der Lackfilme betrug 25 bis 30 µm.

Beispiel 18

Die Herstellung und Applikation sowie Härtung des Lackes erfolgte gemäß C.1.

Rezeptur :

46,49 Gew.- % Polyesterlösung gemäß B.4
16,01 Gew.- % Vernetzerlösung gemäß A.4d)
7,0 Gew.- % Lösungsmittelgemisch gemäß der eingesetzten Lacklösung
29,4 Gew.- % Weißpigment ($TiO_2$)
1,0 Gew.- % Entschäumer (Byk-Spezial)
0,1 Gew.- % Verlaufmittel (Siliconöl OL)

(Siehe Tabelle Seite 22 f.)

| Härtungs-bedingungen | Mechanische Kenndaten | | | | | | | | |
|---|---|---|---|---|---|---|---|---|---|
| Zeit / Temp. min / °C | HK | HB | ET | Imp. rev. | T-Bend-Test | Bleist.-härte | GS | GG 60° ⅄ | GG 20° ⅄ |
| 7 / 200 | 162 | 100 | > 10 | >944,64 | 0 | H | 0 | 86 | 69 |
| 10 / 180 | 160 | 100 | > 10 | >944,64 | 0 | H | 0 | 87 | 69 |
| 14 / 170 | 163 | 111 | > 10 | >944,64 | 0 | H | 0 | 83 | 64 |
| 18 / 160 | 159 | 100 | > 10 | >944,64 | 0 | H | 0 | 84 | 65 |
| 23 / 150 | 160 | 100 | > 10 | >944,64 | 0 | H | 0 | 81 | 62 |

Die Schichtdicke der Lackfilme betrug 25 bis 30 µm.

Beispiel 19

Die Herstellung und Applikation sowie Härtung des Lackes erfolgte gemäß C.1.

Rezeptur :

38,07 Gew.-% Polyesterlösung gemäß B.2
24,43 Gew.-% Vernetzerlösung gemäß A.5a)
7,0 Gew.-% Lösungsmittelgemisch gemäß der eingesetzten Lacklösung
29,4 Gew.-% Weißpigment ($TiO_2$)
1,0 Gew. % Entschäumer (Byk-Spezial)
0,1 Gew.-% Verlaufmittel (Siliconöl OL)

| Härtungs-bedingungen | Mechanische Kenndaten | | | | | | | | |
|---|---|---|---|---|---|---|---|---|---|
| Zeit / Temp. min. / °C | HK | HB | ET | Imp. rev. | T-Bend-Test | Bleist. härte | GS | GG 60° ⅄ | GG 20° ⅄ |
| 1,5 / 300 | 185 | 125 | > 10 | >944,64 | 1 | 2H | 0 | 87 | 70 |
| 7 / 200 | 183 | 125 | > 10 | >944,64 | 1 - 2 | 2H | 0 | 89 | 71 |
| 10 / 200 | 186 | 125 | > 10 | >944,64 | - - | 2H | 0 | 90 | 74 |
| 20 / 180 | 182 | 125 | > 10 | >944,64 | 1 | 2H | 0 | 88 | 69 |
| 30 / 170 | 180 | 125 | > 10 | >944,64 | 1 - 2 | 2H | 0 | 86 | 70 |

Die Schichtdicke der Lackfilme betrug 25 bis 30 µm.

Beispiel 20

Die Herstellung und Applikation sowie Härtung des Lackes erfolgte gemäß C.1.

Rezeptur :

39,28 Gew.-% Polyesterlösung gemäß B.2
23,22 Gew.-% Vernetzerlösung gemäß A.5b)
7,0 Gew.-% Lösungsmittelgemisch gemäß der eingesetzten Lacklösung
29,4 Gew.-% Weißpigment ($TiO_2$)
1,0 Gew.-% Entschäumfer (Byk-Spezial)
0,1 Gew.-% Verlaufmittel (Siliconöl OL)

| Härtungs-bedingungen | Mechanische Kenndaten | | | | | | | | |
|---|---|---|---|---|---|---|---|---|---|
| Zeit / Temp. min. / °C | HK | HB | ET | Imp. rev. | T-Bend-Test | Bleist. härte | GS | GG 60 °∢ | GG 20 °∢ |
| 1,5 / 300 | 184 | 125 | >10 | >944,64 | 1 - 2 | 2H | 0 | 87 | 70 |
| 7 / 200 | 189 | 125 | >10 | >944,64 | 1 | 2H - 3H | 0 | 89 | 72 |
| 10 / 200 | 187 | 125 | >10 | >944,64 | 1 - 2 | 2H | 0 | 86 | 69 |
| 20 / 180 | 186 | 125 | >10 | >944,64 | 1 - 2 | 2H | 0 | 88 | 70 |
| 30 / 170 | 189 | 125 | >10 | >944,64 | 1 - 2 | 2H | 0 | 85 | 68 |

Die Schichtdicke der Lackfilme betrug 25 bis 30 µm.

Beispiel 21

Die Herstellung und Applikation sowie Härtung des Lackes erfolgte gemäß C.1.

Rezeptur :

40,03 Gew.-% Polyesterlösung gemäß B.1
16,97 Gew.-% Vernetzerlösung gemäß A.5b)
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

(Siehe Tabelle Seite 24 f.)

| Härtungsbedingungen | Mechanische Kenndaten | | | | | | | | |
|---|---|---|---|---|---|---|---|---|---|
| Zeit / Temp. min. / °C | HK | HB | ET | Imp. rev. | T-Bend-Test | Bleist. härte | GS | GG 60 °∡ | GG 20 °∡ |
| 1,5 / 300 | 172 | 125 | > 10 | >944,64 | 1 | 2H | 0 | 87 | 70 |
| 7 / 200 | 169 | 111 | > 10 | >944,64 | 1 | 2H | 0 | 86 | 72 |
| 10 / 200 | 173 | 125 | > 10 | >944,64 | 0 - 1 | 2H | 0 | 90 | 73 |
| 20 / 180 | 170 | 111 | > 10 | >944,64 | 0 - 1 | 2H | 0 | 88 | 69 |
| 30 / 170 | 168 | 111 | > 10 | >944,64 | 1 | H - 2H | 0 | 84 | 67 |

Die Schichtdicke der Lackfilme betrug 25 bis 30 µm.

Beispiel 22

Die Herstellung und Applikation sowie Härtung des Lackes erfolgte gemäß C.1.

Rezeptur :

42,19 Gew.-% Polyesterlösung gemäß B.4
20,31 Gew.-% Vernetzerlösung gemäß A.6b)
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL).

| Härtungsbedingungen | Mechanische Kenndaten | | | | | | | | |
|---|---|---|---|---|---|---|---|---|---|
| Zeit / Temp. min. / °C | HK | HB | ET | Imp. rev. | T-Bend-Test | Bleist. härte | GS | GG 60 °∡ | GG 20 °∡ |
| 1,5 / 300 | 169 | 111 | > 10 | >944,64 | 0 - 1 | H - 2H | 0 | 88 | 68 |
| 7 / 200 | 165 | 111 | > 10 | >944,64 | 0 - 1 | H - 2H | 0 | 85 | 69 |
| 10 / 200 | 168 | 111 | > 10 | >944,64 | 0 - 1 | 2H | 0 | 88 | 67 |
| 20 / 180 | 164 | 100 | > 10 | >944,64 | 0 - 1 | H - 2H | 0 | 86 | 64 |
| 30 / 170 | 164 | 100 | > 10 | >944,64 | 1 | H - 2H | 0 | 87 | 68 |

Die Schichtdicke der Lackfilme betrug 25 bis 30 µm.

Beispiel 23

Die Herstellung und Applikation sowie Härtung des Lackes erfolgte gemäß C.1.

Rezeptur :

43,91 Gew.-% Polyesterlösung gemäß B.4
18,59 Gew.-% Vernetzerlösung gemäß A.7b)
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL).

| Härtungs-bedingungen | Mechanische Kenndaten | | | | | | | | |
|---|---|---|---|---|---|---|---|---|---|
| Zeit / Temp. min. / °C | HK | HB | ET | Imp. rev. | T-Bend-Test | Bleist. härte | GS | GG 60 °% | GG 20 °% |
| 1,5 / 300 | 161 | 100 | > 10 | >944,64 | 0 | H | 0 | 84 | 68 |
| 7 / 200 | 160 | 100 | > 10 | >944,64 | 0 | H | 0 | 88 | 72 |
| 10 / 200 | 162 | 100 | > 10 | >944,64 | 0 | H | 0 | 86 | 70 |
| 20 / 180 | 158 | 100 | > 10 | >944,64 | 0 | H | 0 | 87 | 69 |
| 30 / 170 | 159 | 100 | > 10 | >944,64 | 0 - 1 | H | 0 | 88 | 69 |

Die Schichtdicke der Lackfilme betrug 25 bis 30 µm.

Beispiel 24

Die Herstellung und Applikation sowie Härtung des Lackes erfolgte gemäß C.1.

Rezeptur :

43,92 Gew.-% Polyesterlösung gemäß B.4
18,58 Gew.-% Vernetzerlösung gemäß A.6d)
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

(Siehe Tabelle Seite 26 f.)

| Härtungsbedingungen | Mechanische Kenndaten | | | | | | | | |
|---|---|---|---|---|---|---|---|---|---|
| Zeit / Temp. min / °C | HK | HB | ET | Imp. rev. | T-Bend-Test | Bleist.-härte | GS | GG 60° ∢ | GG 20° ∢ |
| 7 / 200 | 167 | 111 | > 10 | >944,64 | 0 - 1 | H | 0 | 89 | 69 |
| 10 / 180 | 165 | 100 | > 10 | >944,64 | 0 | H | 0 | 91 | 72 |
| 14 / 170 | 166 | 111 | > 10 | >944,64 | 0 - 1 | H - 2H | 0 | 88 | 71 |
| 18 / 160 | 162 | 100 | > 10 | >944,64 | 0 - 1 | H | 0 | 90 | 69 |
| 23 / 150 | 161 | 100 | > 10 | >944,64 | 0 - 1 | H | 0 | 90 | 70 |

Die Schichtdicke der Lackfilme betrug 25 bis 30 µm.

Beispiel 25

Die Herstellung und Applikation sowie Härtung des Lackes erfolgte gemäß C.1.

Rezeptur :

45,86 Gew.-% Polyesterlösung gemäß B.4
16,64 Gew.-% Vernetzerlösung gemäß A.7d)
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

| Härtungsbedingungen | Mechanische Kenndaten | | | | | | | | |
|---|---|---|---|---|---|---|---|---|---|
| Zeit / Temp. min / °C | HK | HB | ET | Imp. rev. | T-Bend-Test | Bleist.-härte | GS | GG 60° ∢ | GG 20° ∢ |
| 7 / 200 | 162 | 100 | > 10 | >944,64 | 0 | H | 0 | 86 | 70 |
| 10 / 180 | 159 | 100 | > 10 | >944,64 | 0 | H | 0 | 87 | 69 |
| 14 / 170 | 161 | 100 | > 10 | >944,64 | 0 - 1 | H | 0 | 84 | 68 |
| 18 / 160 | 158 | 100 | > 10 | >944,64 | 0 | H | 0 | 88 | 70 |
| 23 / 150 | 158 | 100 | > 10 | >944,64 | 0 - 1 | H | 0 | 95 | 67 |

Die Schichtdicke der Lackfilme betrug 25 bis 30 µm.

**Patentansprüche**

1. Lösungsmittelhaltige Einkomponenten-Einbrennlacke aus hydroxylgruppenhaltigen Polyestern und aliphatischen Polyisocyanaten sowie üblichen Zusatzstoffen, dadurch gekennzeichnet, daß als Polyisocyanatkomponente total oder partiell blockiertes 2-Methyl-1,5-diisocyanatopentan oder Gemische aus 88 bis 99 Gew.- % 2-Methyl-1,5-diisocyanatopentan und 12 bis 1 Gew.- % 2-Ethyl-1,4-diisocyanatobutan gemäß den Formeln I und II

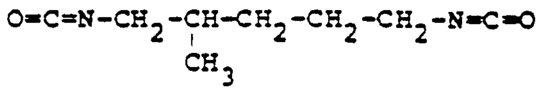 (MPDI) (I)

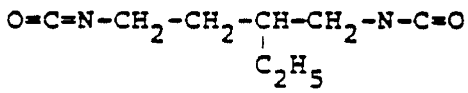 (EBDI) (II)

in Form des Trimerisats oder des Umsetzungsproduktes mit Diolen und/oder Triolen, gegebenenfalls zusammen mit monomeren MPDI oder MPDI/EBDI-Gemisch, eingesetzt wird, und die nichtblockierten Verbindungen einen NCO-Gehalt von 10 bis 45 Gew.-%, die blockierten einen NCO-Gehalt von $\leq 8$, vorzugsweise $\leq 6$, aufweisen.

2. Einkomponenten-Einbrennlacke nach Anspruch 1, dadurch gekennzeichnet, daß das Umsetzungsprodukt von MPDI bzw. dem Gemisch von MPDI/EBDI mit Triolen die Trimethylolpropan-Addukt ist.

**Claims**

1. Solvent-containing one-component baking paints consisting of hydroxylated polyesters and aliphatic polyisocyanates as well as conventional additives, characterized in that, as the polyisocyanate component, totally or partially blocked 2-methyl-1,5-diisocyanatopentane or mixtures of 88 to 99 % by weight of 2-methyl-1,5-diisocyanatopentane and 12 to 1 % by weight of 2-ethyl-1,4-diisocyanatobutane according to formulae I and II

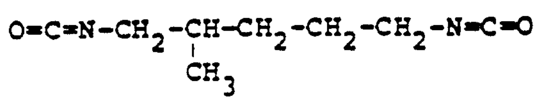 (MPDI) (I)

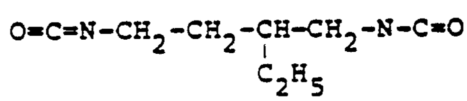 (EBDI) (II)

are used in the form of the trimer or of the reaction product with diols and/or triols, if appropriate together with monomeric MPDI or MPDI/EBDI mixture, and the unblocked compounds have an NCO content of 10 to 45 % by weight, and the blocked compounds have an NCO content of $\leq 8$, preferably $\leq 6$.

2. One-component baking paints according to Claim 1, characterized in that the reaction product of MPDI or the MPDI/EBDI mixture with triols is the trimethylolpropane adduct.

**Revendications**

1. Vernis au four à un composant, contenant un solvant, à base de polyesters à groupes hydroxyle et de polyisocyanates aliphatiques, ainsi que d'additifs usuels, caractérisés en ce que l'on utilise en tant que composant polyisocyanate du 2-méthyl-1,5-diisocyanatopentane totalement ou partiellement bloqué ou des mélanges de 88 à 99 % en poids de 2-méthyl-1,5-diisocyanatopentane et 12 à 1 % en poids de 2-éthyl-1,4-diisocyanatobutane selon les formules I et II

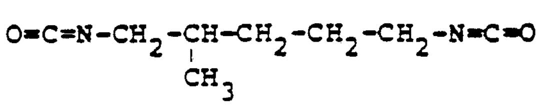 (MPDI) (I)

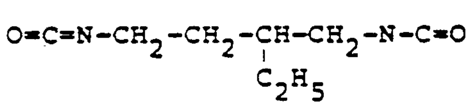 (EBDI) (II)

sous forme du trimère ou du produit de réaction avec des diols et/ou des triols, éventuellement conjointement avec le monomère MPDI ou un mélange MPDI/EBDI, et les composés non bloqués présentent une teneur en NCO allant de 10 à 45 % en poids, les composés bloqués ayant une teneur en NCO ≤ 8, de préférence ≤ 6.

2. Vernis au four à un composant selon la revendication 1, caractérisés en ce que le produit de réaction de MPDI ou du mélange MPDI/EBDI avec des triols est une combinaison par addition de triméthylolpropane.